# EUROPÄISCHE PATENTSCHRIFT

(11) **EP 3 614 849 B1**
(45) Veröffentlichungstag und Bekanntmachung des Hinweises auf die Patenterteilung: **12.02.2025**
(21) Anmeldenummer: 18718852.9
(22) Anmeldetag: 27.04.2018
(51) Int. Cl.: A21B 5/02, A21C 9/08

(54) **BACKOFEN**
BAKING OVEN
FOUR DE CUISSON

(30) Priorität: 28.04.2017 EP 17168650
(43) Veröffentlichungstag der Anmeldung: 04.03.2020
(73) Patentinhaber: Haas Food Equipment GmbH, 2100 Leobendorf (AT)
(72) Erfinder: BIBARIC, Markus, 3400 Kierling (AT); JIRASCHEK, Stefan, 2202 Königsbrunn (AT); MILLER, Karl, 1100 Wien (AT); SCHELLER, Markus, 2004 Bruderndorf (AT); STEINBÖCK, Michael, 3042 Holzleiten (AT); SÜSS, Daniel, 3430 Tulln an der Donau (AT)
(74) Vertreter: Puchberger & Partner Patentanwälte
(86) Internationale Anmeldenummer: PCT/EP2018/060843
(87) Internationale Veröffentlichungsnummer: WO 2018/197658

(56) Entgegenhaltungen:
- EP-A1- 3 103 345
- WO-A1-2015/165868
- AT-B- 377 419
- BE-A- 535 850
- DE-A1- 102011 054 018
- DE-A1- 2 030 230
- DE-U1- 202005 013 663
- JP-A- 2014 090 697
- US-A- 5 787 800

## Beschreibung

Die Erfindung betrifft einen Backofen gemäß dem Oberbegriff des unabhängigen Patentanspruchs.

Backöfen sind in unterschiedlichen Ausführungen bekannt und publiziert. Die erfindungsgemäße Vorrichtung betrifft bevorzugt einen industriellen Backofen zur Herstellung von Backprodukten, wie beispielsweise einen Backofen zur Herstellung von Flachwaffeln oder Hohlwaffeln.

Derartige Öfen sind beispielsweise als sogenannte Backzangenautomaten ausgebildet. Bei diesen speziellen Backöfen sind entlang eines Endlosförderers auf- und zuklappbare Backzangen vorgesehen, die insbesondere in ihrer zugeklappten Stellung jeweils eine Backform bilden. Die Backzangen werden entlang des Endlosförderers meist kontinuierlich durch den Backofen gefördert. Dabei wird auf eine aufgeklappte Backzange eine Backmasse aufgetragen. In weiterer Folge wird die Backzange zugeklappt, verriegelt und gemäß Stand der Technik durch eine Öffnung in der Vorkopfwand in den heißen Backraum befördert. In weiterer Folge wird das Backprodukt in der geschlossenen Backzange durch den Backraum gefördert und dort ausgebacken. In weiterer Folge wird die geschlossene Backzange wiederum durch eine Öffnung der Vorkopfwand in den Vorkopf der Backanlage gefördert und dort geöffnet, sodass das Backprodukt entnommen werden kann. In weiterer Folge beginnt der Zyklus von neuem.

Am Markt besteht nun eine Nachfrage nach Backöfen zur industriellen Herstellung von Backprodukten, deren Effizienz, insbesondere deren Energieeffizienz, verbessert wird. Bisher wurde eine Verbesserung der Energieeffizienz beispielsweise dadurch bewirkt, dass der Backraum weitestgehend geschlossen ausgebildet wird. Dadurch konnten die Wärmeverluste verringert werden. Weitere Maßnahmen zur Steigerung der Effizienz sind beispielsweise die Verwendung von Strahlungsbrennern oder auch die Regelung der zu- oder abgeführten Luft.

Gemäß Stand der Technik weisen gattungsgemäße Backvorrichtungen immer einen sogenannten Vorkopf auf, in dem das Backprodukt entnommen wird und in dem der Teigaufguss geschieht. Da in diesem Bereich mechanisch aufwändige Konstruktionen angeordnet sind, weist der Vorkopf einer Backmaschine gemäß Stand der Technik eine öffenbare Türe auf, die es einer Serviceperson ermöglicht, Komponenten, wie den Teigaufgießer oder die Waffelblattabnahme, zu inspizieren und gegebenenfalls zu reparieren. Zur Kühlung dieses Vorkopfs weisen herkömmliche Backmaschinen meist einen eigenen Abzug für den Vorkopf auf. Ferner ist der Vorkopf durch eine Vorkopfwand weitestgehend vom Backraum abgetrennt. Nachteilig an diesen herkömmlichen Konstruktionen ist, dass die Backplatten im Vorkopf abkühlen. Diese Abkühlung verschlechtert die Effizienz eines Backofens.

Herkömmliche Vorrichtungen sind unter anderem aus der JP 2014 090697 A, der BE 535 850, der US 5,787,800 A, der DE 20 2005 013 663 U1 und der DE 2 030 230 A1 bekannt.

Aufgabe der Erfindung ist es nun, die Nachteile des Standes der Technik zu überwinden. Insbesondere ist es Aufgabe der Erfindung, einen Backofen mit verbesserter Effizienz bereitzustellen.

Die erfindungsgemäße Aufgabe wird insbesondere durch die Merkmale des unabhängigen Patentanspruchs gelöst.

Die Erfindung geht aus von einem Backofen zum Herstellen gebackener, bevorzugt essbarer, Produkte, nämlich zur Herstellung von Flachwaffeln oder Hohlwaffeln. Der Backofen umfasst mehrere entlang einem Endlosförderer vorgesehene öffenbare und schließbare Backzangen, die aneinandergereiht jeweils nacheinander:
- einen Backmassenauftragsbereich zum Auftrag einer Backmasse auf eine geöffnete Backzange, wobei die Backmasse eine flüssige oder eine flüssig-pastöse Konsistenz aufweist,
- einen Schließbereich zum Schließen der Backzangen,
- einen Öffenbereich zum Öffnen der Backzangen,
- und einen Backproduktentnahmebereich zur Entnahme der gebackenen Produkte aus den geöffneten Backzangen durchlaufen,
- wobei sich der Endlosförderer zum Backen der Backprodukte in den geschlossenen Backzangen, durch einen Backraum erstreckt,
- wobei der Endlosförderer oder zumindest die Backzangen entlang einer oberen Transportebene verlaufen, dann in einem hinteren Umlenkbereich auf eine, unterhalb der oberen Transportebene verlaufende, untere Transportebene umgelenkt werden, dann weiter entlang der unteren Transportebene verlaufen und in einem vorderen Umlenkbereich wieder auf die obere Transportebene umgelenkt werden,
- wobei in dem Backraum mindestens eine Heizanordnung zur Beheizung der im Backraum befindlichen Backzangen vorgesehen ist,
- wobei die Heizanordnung zwei Heizvorrichtungen umfasst, die als Strahlungsheizvorrichtungen ausgebildet sind,
- wobei der Backmassenauftragsbereich, der Schließbereich, der Öffenbereich und der Backproduktentnahmebereich innerhalb des Backraums angeordnet sind, sodass sich der Backraum im Wesentlichen über den gesamten Backofen erstreckt,
- wobei die obere Transportebene, der hintere Umlenkbereich, die untere Transportebene und der vordere Umlenkbereich innerhalb des Backraums angeordnet sind,
- wobei der Backraum als im Wesentlichen geschlossener Backraum ausgebildet ist, der an allen Seiten von wärmeisolierten Backraumwänden umgeben ist,
- und wobei der Backraum im Backbetrieb durch die Heizanordnung im Backmassenauftragsbereich, im Schließbereich, im Öffenbereich, im Backproduktentnahmebereich und im vorderen Umlenkbereich auf über 100°C, bevorzugt auf über 150°C oder besonders bevorzugt auf über oder etwa 175°C aufgeheizt ist.

Erfindungsgemäß ist vorgesehen, dass die Backraumwände im Backmassenauftragsbereich, im Schließbereich, im Öffenbereich, im Backproduktentnahmebereich und im vorderen Umlenkbereich mit einer Wärmeisolierung versehen sind.

Erfindungsgemäß ist auch vorgesehen, dass die Heizvorrichtungen jeweils einen porösen Körper an ihrer Unterseite aufweisen, in dem und/oder an dessen Oberfläche ein Brenngemisch verbrannt wird und bevorzugt im Wesentlichen flammenfrei verbrannt wird, und dass der poröse Körper beispielsweise ein Metallgewebe, ein Drahtgewebe oder ein Metallgeflecht ist oder enthält.

Erfindungsgemäß ist weiterhin vorgesehen, dass im Backmassenauftragsbereich eine Backmassenauftragsvorrichtung in den Backraum ragt, wobei die Backmassenauftragsvorrichtung insbesondere eine Backmassenzuführungsleitung und einen Aufgießer zur Förderung und zum Auftrag der Backmasse umfasst, und dass der in den Backraum ragende Abschnitt der Backmassenauftragsvorrichtung zur thermischen Isolierung oder Entkopplung der zuzuführenden Backmasse vom heißen Backraum, mit einer Wärmeisolierung und/oder mit einer Kühlung versehen ist.

Gegebenenfalls ist vorgesehen, dass der gesamte Endlosförderer oder zumindest alle an dem Endlosförderer angeordneten Backzangen, insbesondere während des Backbetriebs, innerhalb des Backraums angeordnet sind.

Gegebenenfalls ist vorgesehen, dass in zumindest einer der Backraumwände, insbesondere in einer seitlichen Backraumwand, mindestens ein Sichtfenster zur Ermöglichung der Augenscheinnahme des Backmassenauftragsbereichs, des Schließbereichs, des Öffenbereichs und/oder des Backproduktentnahmebereichs von außen vorgesehen ist.

Gegebenenfalls ist vorgesehen, dass das Sichtfenster als Isolierfensteranordnung ausgebildet ist, die zwei voneinander parallel beabstandete Scheiben mit einem dazwischenliegenden Isolierraum umfasst und bei der zumindest die innere Scheibe temperaturbeständig, insbesondere temperaturbeständig bis etwa 250°C oder mehr, ausgebildet ist.

Gegebenenfalls ist vorgesehen, dass das Sichtfenster oder zumindest eine der Scheiben der Isolierfensteranordnung lasersicher ausgebildet ist/sind, und insbesondere einen Filter für Laserstrahlung eines Reinigungslasers umfasst.

Gegebenenfalls ist vorgesehen, dass mindestens ein Abzug zur Abführung der durch die Heizanordnung erzeugten Backraumgase aus dem Backraum vorgesehen ist.

Gegebenenfalls ist vorgesehen, dass ein Abzug im Backmassenauftragsbereich, im Schließbereich, im Öffenbereich, im Backproduktentnahmebereich oder im vorderen Umlenkbereich in den Backraum mündet bzw. aus dem Backraum abzweigt.

Gegebenenfalls ist vorgesehen, dass ein oder ein weiterer Abzug zwischen der Heizanordnung und dem Schließbereich in den Backraum mündet bzw. aus dem Backraum abzweigt.

Gegebenenfalls ist vorgesehen, dass ein regelbares Abzuggebläse zur Absaugung des Brennraumgases durch einen Abzug vorgesehen ist.

Gegebenenfalls ist vorgesehen, dass eine Lichtquelle zur Beleuchtung des Backmassenauftragsbereichs, des Schließbereichs, des Öffenbereichs und/oder des Backproduktentnahmebereichs vorgesehen ist.

Gegebenenfalls ist vorgesehen, dass mindestens eine Bildaufnahmeeinrichtung, wie insbesondere eine Videokamera, vorgesehen ist, die auf den Backmassenauftragsbereich, auf den Schließbereich, auf den Öffenbereich und/oder auf den Backproduktentnahmebereich gerichtet ist.

Gegebenenfalls ist vorgesehen, dass die Bildaufnahmeeinrichtung und/oder die Lichtquelle zur Isolierung oder zur thermischen Entkopplung gegenüber dem heißen Backraum mit einer Wärmeisolierung und/oder mit einer Kühlung versehen ist.

Eine Ausführungsform der Erfindung betrifft auch insbesondere einen Backofen,
- bei dem eine Räumanordnung zum automatischen oder automatisierten Austrag von im Backraum anfallendem Backabfall vorgesehen ist,
- wobei die Räumanordnung eine Räumförderfläche umfasst, die unterhalb des Endlosförderers entlang der Längserstreckung des Endlosförderers verläuft,
- wobei die Räumanordnung entlang eines endlosen Räumförderers angeordnete Räumelemente aufweist, die zur Beförderung des Backabfalls von dem Räumförderer entlang der Räumförderfläche bewegt werden oder sind,
- und wobei der als Endlosförderer ausgebildete Räumförderer oder zumindest die an dem Räumförderer angebrachten Räumelemente zusammen einen oberen Abschnitt und einen unterhalb des oberen Abschnitts angeordneten unteren Abschnitt definieren, Gegebenenfalls ist vorgesehen, dass die Räumförderfläche zwischen dem oberen Abschnitt und dem unteren Abschnitt angeordnet ist.

Gegebenenfalls ist vorgesehen, dass die Räumförderfläche unmittelbar unterhalb des oberen Abschnitts angeordnet ist, und dass der Austrag des Backabfalls entlang der Räumförderfläche durch Bewegung der Räumelemente des oberen Abschnitts erfolgt. Gegebenenfalls ist vorgesehen, dass die Bewegungsrichtung der Räumelemente des oberen Abschnitts vom hinteren Umlenkbereich des Endlosförderers der Backzangen Richtung vorderem Umlenkbereich des Endlosförderers der Backzangen verläuft. Gegebenenfalls ist vorgesehen, dass die Bewegungsrichtung der Räumelemente des oberen Abschnitts der Bewegungsrichtung der Backplatten entlang der unteren Transportebene folgt.

Gegebenenfalls ist vorgesehen, dass zwischen dem oberen Abschnitt und dem unteren Abschnitt der Räumanordnung eine Wärmeisolierung vorgesehen ist, und dass die Wärmeisolierung insbesondere unterhalb der Räumförderfläche oder unmittelbar unterhalb der Räumförderfläche angeordnet ist.

Gegebenenfalls ist vorgesehen, dass die Räumanordnung, insbesondere die Räumförderfläche, den Backraum begrenzt oder zumindest eine der Backraumwände bildet.

Gegebenenfalls ist vorgesehen, dass der Backraum oder dessen Backraumwände, insbesondere im vorderen Umlenkbereich, mindestens eine Öffnung zur Ausgabe der gebackenen Produkte und/oder zum Austrag des Backabfalls aufweist.

Erfindungsgemäß wird somit vorgeschlagen, dass der Backofen keinen Vorkopf im herkömmlichen Sinne mehr umfasst. Eine Vorkopfwand, durch die der Backmassenauftragsbereich, der Schließbereich, der Öffenbereich und/oder der Backproduktentnahmebereich vom Backraum abgetrennt werden, kann bei dem erfindungsgemäßen Backofen entfallen. Dadurch befinden sich der Backmassenauftragsbereich, der Schließbereich, der Öffenbereich und der Backproduktentnahmebereich innerhalb des Backraums. Dieser Backraum erstreckt sich somit im Wesentlichen über den gesamten Backofen. Durch den Entfall eines kühlen Vorkopfes wird die Effizienz des Backofens verbessert.

Um darüber hinaus die Effizienz des Backofens weiter zu steigern, ist es vorteilhaft, die Wartungszeiten so weit wie möglich zu verkürzen. Zu diesem Zweck werden mehrere Maßnahmen vorgeschlagen.

Insbesondere kann es vorteilhaft sein, dass in zumindest einer der Backraumwände ein Sichtfenster vorgesehen ist, das trotz des heißen, geschlossenen Backraums eine Augenscheinnahme des Backmassenauftragsbereichs, des Schließbereichs, des Öffenbereichs und/oder des Backproduktentnahmebereichs ermöglicht, ohne den Backprozess stoppen zu müssen. Bevorzugt ist vorgesehen, dass dieses Sichtfenster als Isolierfensteranordnung ausgebildet ist, sodass insbesondere die Temperatur der außen liegenden Scheibe geringer ist als die Backraumtemperatur, und sodass der Wärmverlust verringert wird.

Erfindungsgemäß ist vorgesehen, dass die Backmassenauftragsvorrichtung zumindest teilweise mit einer Wärmeisolierung und/oder mit einer Kühlung versehen ist. Anderenfalls besteht die Gefahr, dass die Backmasse oder der Teig bereits bei der Zuführung innerhalb der Backmassenauftragsvorrichtung erstarrt und somit den Aufgießer der Backmassenauftragsvorrichtung verstopft. Diese Maßnahme wird insbesondere erst dadurch notwendig, dass sich die Backmassenauftragsvorrichtung innerhalb des Backraums befindet bzw. nicht innerhalb eines verhältnismäßig kühlen Vorkopfs angeordnet ist.

Ferner kann vorgesehen sein, dass eine Bildaufnahmeeinrichtung und/oder eine Lichtquelle vorgesehen ist/sind. Auch durch diese Maßnahmen kann der Backprozess beobachtet werden, ohne den Backprozess stoppen zu müssen und ohne die Produktion zu beeinträchtigen.

Ferner kann vorgesehen sein, dass über eine automatisierte oder eine automatische Räumanordnung der im Backraum anfallende Backabfall aus dem Backofen entfernt werden kann - und dies ebenfalls, ohne den Backprozess stoppen zu müssen.

Im Gegensatz zu herkömmlichen gattungsgemäßen Backöfen wird durch die unterschiedlichen Maßnahmen die Effizienz bei dem erfindungsgemäßen Backofen stark verbessert.

Der Gegenstand der Erfindung ist durch die Patentansprüche definiert. Die hierbei offenbarten Maßnahmen und Konstruktionen können auch unabhängig voneinander an herkömmlichen Backöfen vorgesehen sein, um deren Effizienz zu verbessern. Derartige unabhängige Maßnahmen oder Konstruktionen sind beispielsweise der Entfall der Vorkopfwand, die Anordnung des Backmassenauftragsbereichs, des Schließbereichs, des Öffenbereichs und des Backproduktentnahmebereichs innerhalb des Backraums, die Anordnung des vorderen und hinteren Umlenkbereichs innerhalb des Backraums, die Anordnung aller Backzangen bzw. des Endlosförderers im Backraum, die Anordnung eines Sichtfensters, die Verwendung eines regelbaren Abzuggebläses, die Wärmeisolierung und/oder die Kühlung der Backmassenauftragsvorrichtung, die Kameraüberwachung relevanter Bereiche und/oder die spezielle Ausgestaltung der Räumanordnung. Gegebenenfalls können diese Maßnahmen und Konstruktionen, insbesondere die Anordnung eines Sichtfensters, die Verwendung eines regelbaren Abzuggebläses, die Wärmeisolierung und/oder die Kühlung der Backmassenauftragsvorrichtung, die Kameraüberwachung relevanter Bereiche und/oder die spezielle Ausgestaltung der Räumanordnung, auch an einem Backofen vorgesehen sein, der einen durch eine Vorkopfwand abgetrennten Vorkopf umfasst.

Gegebenenfalls betrifft die Erfindung einen Backofen zum Herstellen gebackener, bevorzugt essbarer, Produkte, umfassend einen Backraum, mit einem unteren Backbereich und einem oberhalb des unteren Backbereichs angeordneten oberen Backbereich, eine Backzangenkette, die kontinuierlich umlaufend entlang einer oberen Transportebene durch den oberen Backbereich und entlang einer unteren Transportebene durch den unteren Backbereich bewegt ist, und die auf- und zuklappbare Backzangen enthält.

Gegebenenfalls ist vorgesehen, dass die Backzangen je eine Oberplattenanordnung und eine Unterplattenanordnung umfassen, zwischen denen in zugeklappter Stellung eine Backform für die Backprodukte gebildet ist.

Gegebenenfalls ist vorgesehen, dass die Oberplattenanordnung und die Unterplattenanordnung jeweils an ihrer der Backform abgewandten Seite eine Rückenfläche aufweisen, die jeweils über einen Wärme leitenden und speichernden Basiskörper mit der Backform verbunden sind.

Gegebenenfalls ist vorgesehen, dass die Backzangen beim Übergang von der oberen Transportebene auf die untere Transportebene umgedreht werden, sodass die in der oberen Transportebene oberhalb der Unterplattenanordnung angeordnete Oberplattenanordnung in der unteren Transportebene unterhalb der Unterplattenanordnung angeordnet ist.

In allen Ausführungsformen betrifft die Erfindung einen Backofen zur Herstellung von knusprig spröden Flachwaffeln oder Hohlwaffeln betreffen. Bei diesen Backöfen werden auf- und zuklappbare Backzangen durch einen beheizten Backraum eines Backofens geführt. Die knusprig spröde Konsistenz der Backprodukte resultiert aus dem Effekt, dass Backmassen oder Teige mit hohem Wasseranteil von etwa 50-70% unter hohem Druck ausgebacken werden. Dabei entweicht das Wasser der Backmasse in Form von Wasserdampf sehr rasch und hinterlässt dabei eine poröse, spröde Struktur. Um den Backprozess unter hohem Druck durchführen zu können, ist eine Verriegelungsvorrichtungen vorgesehen. Über diese können die Backzangen verriegelt werden, sodass sich im Inneren ein Überdruck aufbauen kann. Nur durch diesen Überdruck kann der gewünschte Backverlauf erzielt werden. Die Verriegelungsvorrichtungen sind bevorzugt an den Backzangen vorgesehen und im oder nach dem Schließbereich betätigt.

Gegebenenfalls ist vorgesehen, dass zumindest eine als Strahlungsheizvorrichtung ausgebildete obere Heizvorrichtung und zumindest eine als Strahlungsheizvorrichtung ausgebildete untere Heizvorrichtung vorgesehen sind, in denen jeweils ein Brenngemisch, enthaltend Primärsauerstoff und einen Brennstoff, verbrannt wird.

In allen Ausführungsformen weist die Backmasse eine flüssige oder eine flüssig-pastöse Konsistenz auf.

Gegebenenfalls ist vorgesehen, dass die obere Heizvorrichtung im oberen Backbereich und oberhalb der oberen Transportebene angeordnet ist und zur Beheizung der Backform von oben auf die Rückenfläche der Oberplattenanordnung gerichtet ist.

Gegebenenfalls ist vorgesehen, dass die untere Heizvorrichtung im unteren Backbereich zwischen der oberen Transportebene und der unteren Transportebene angeordnet ist und zur Beheizung der Backform von oben auf die Rückenfläche der Unterplattenanordnung gerichtet ist.

Erfindungsgemäß ist vorgesehen, dass die Heizvorrichtungen jeweils einen porösen Körper an ihrer Unterseite aufweisen, in dem und/oder an dessen Oberfläche das Brenngemisch verbrannt wird und bevorzugt im Wesentlichen flammenfrei verbrannt wird, und dass der poröse Körper beispielsweise ein Metallgewebe, ein Drahtgewebe oder ein Metallgeflecht ist oder enthält.

Gegebenenfalls ist vorgesehen, dass eine Fördervorrichtung, wie insbesondere ein Gebläse zur Zuführung des Brenngemisches an eine Heizvorrichtung, vorgesehen ist, und dass über Steuerung und/oder Regelung der Fördervorrichtung die Heizleistung der Heizvorrichtung veränderbar ist, und bevorzugt dass die obere Heizvorrichtung mit einer oberen Fördervorrichtung und die untere Heizvorrichtung mit einer unteren Fördervorrichtung verbunden ist, sodass die Heizleistungen der oberen Heizvorrichtung und der unteren Heizvorrichtung getrennt voneinander veränderbar, insbesondere getrennt steuerbar oder getrennt regelbar sind.

Gegebenenfalls ist vorgesehen, dass mehrere obere Heizvorrichtungen und/oder mehrere untere Heizvorrichtungen vorgesehen sind, und bevorzugt dass die Heizleistungen der oberen Heizvorrichtungen und der unteren Heizvorrichtungen getrennt voneinander veränderbar, insbesondere getrennt steuerbar oder getrennt regelbar sind, oder bevorzugt dass die Heizleistungen zweier oberer Heizvorrichtungen getrennt voneinander veränderbar, insbesondere getrennt steuerbar oder getrennt regelbar sind, oder bevorzugt dass die Heizleistungen zweier unterer Heizvorrichtungen getrennt voneinander veränderbar, insbesondere getrennt steuerbar oder getrennt regelbar sind

Gegebenenfalls ist vorgesehen, dass die Abzugsöffnung entlang der Konvektionsströmungsrichtung des Backraumgases entfernt von den Heizvorrichtungen angeordnet ist, sodass das heiße aufsteigende Backraumgas in horizontaler Richtung durch den Backraum geleitet ist, bevor es durch die Abzugsöffnung austritt.

Gegebenenfalls ist vorgesehen, dass eine obere Heizvorrichtung und eine untere Heizvorrichtung im Bereich des hinteren Umlenkbereiches der Backzangenkette und/oder unmittelbar vor und nach dem hinteren Umlenkbereiches der Backzangenkette vorgesehen sind, und dass die Abzugsöffnung entlang der Konvektionsströmungsrichtung des Backraumgases entfernt von den Heizvorrichtungen, bevorzugt in der Nähe des Backmassenauftragsbereichs, des Schließbereichs, des Öffenbereichs und/oder des Backproduktentnahmebereichs angeordnet ist.

Gegebenenfalls ist vorgesehen, dass ein vorderer Ofenteil vorgesehen ist, in dem die Backzangen von der unteren Transportebene in die obere Transportebene geführt und umgelenkt sind, dass im vorderen Ofenteil, insbesondere entlang der oberen Transportebene, eine Einrichtung zum Aufklappen der Backzangen, eine Ausgabestation, eine Beschickungsstation und eine Einrichtung zum Zuklappen der Backzangen in Laufrichtung der Backzangen hintereinander angeordnet sind, und dass der vordere Ofenteil und der Backraum nicht durch eine Trennwand voneinander abgetrennt sind, sodass sich die Einrichtung zum Aufklappen der Backzangen, die Ausgabestation, die Beschickungsstation und die Einrichtung zum Zuklappen der Backzangen im Backraum befinden, oder dass der vordere Ofenteil durch die Heizvorrichtung des Backraums ebenfalls beheizt ist.

Erfindungsgemäß ist vorgesehen, dass die Wände des Backraums vollständig oder teilweise mit einer Wärmeisolierung versehen sind.

Gegebenenfalls ist vorgesehen, dass der Backraum an seiner Unterseite im Wesentlichen geschlossen ist und an seiner Unterseite mit einer Wärmeisolierung versehen ist, wobei der Backraum gegebenenfalls an der Unterseite eine Öffnung aufweist, wobei diese Öffnung bevorzugt weniger als zehn Prozent der Fläche der geschlossenen Unterseite des Backraums einnimmt.

Gegebenenfalls ist vorgesehen, dass der Backraum eine Heizzone umfasst, in der zumindest eine Heizvorrichtung vorgesehen ist und in der die Backzangen durch direkte Einwirkung der Wärmestrahlung der Heizvorrichtung beheizt werden.

Gegebenenfalls ist vorgesehen, dass der Backraum eine strahlungsheizungsfreie Zone umfasst, in der entlang der oberen Transportebene und/oder entlang der unteren Transportebene keine direkte Beheizung der Backzangen durch die Strahlung der Heizvorrichtung vorgesehen ist und in der die Backzangen durch Einwirkung der Konvektionswärme des in Konvektionsströmungsrichtung bewegten heißen Brennraumgases beheizt werden.

Gegebenenfalls ist vorgesehen, dass die Abzugsöffnung in einer strahlungsheizungsfreien Zone des Backraums vorgesehen ist.

Gegebenenfalls ist vorgesehen, dass eine Eintrittsöffnung zur Zuführung von Luft oder rezirkuliertem Brennraumgas in den Backraum vorgesehen ist, die insbesondere im Backraum entlang der Konvektionsströmungsrichtung des Backraumgases entfernt von der Abzugsöffnung vorgesehen ist und gegebenenfalls im Bereich des hinteren Umlenkbereichs des Backofens vorgesehen ist, sodass zur Verbesserung der Konvektionsströmung kontrolliert Luft oder rezirkuliertes Brennraumgas in den Backraum eingebracht wird, wobei die Luft bevorzugt vorgewärmt wird, um eine Abkühlung des Backraums zu verhindern.

Gegebenenfalls ist vorgesehen, dass die Fläche der Eintrittsöffnung bevorzugt weniger als zehn Prozent der den Backraum begrenzenden Fläche einnimmt.

Gegebenenfalls ist vorgesehen, dass mindestens ein Konvektionsgebläse vorgesehen ist, das entfernt vom Abzug in den Backraum mündet. Gegebenenfalls ist vorgesehen, dass das Konvektionsgebläse ein Luftgebläse ist, über das zur Erzeugung künstlicher Konvektion gesteuert oder geregelt Luft, insbesondere Sekundärluft oder ausschließlich Sekundärluft, in den Backraum einbringbar oder eingebracht ist.

Gegebenenfalls ist vorgesehen, dass das Konvektionsgebläse und dessen Konvektionsströmung im Bereich des hinteren Umlenkbereichs oder durch die hintere Stirnwand des Backraums in den Backraum mündet.

Gegebenenfalls ist vorgesehen, dass entlang der Konvektionsströmung des Konvektionsgebläses zuerst die Einmündung des Konvektionsgebläses in den Brennraum, dann ein Bereich des Brennraums, in dem die oder eine Heizanordnung vorgesehen ist, und dann der Abzug durchströmt werden, wobei insbesondere zwischen dem Bereich des Brennraums, in dem die oder eine Heizanordnung vorgesehen ist, und dem Abzug ein Konvektionsbereich vorgesehen ist, in dem keine Heizanordnung vorgesehen ist.

Gegebenenfalls ist vorgesehen, dass die Konvektionsströmung im Backraum entlang der Hauptbewegungsrichtung der Backzangen und insbesondere im Wesentlichen waagrecht verläuft, bevor sie aus dem Abzug austritt.

Gegebenenfalls ist vorgesehen, dass der Abzug, entlang der Hauptbewegungsrichtung der Backzangen gesehen, entfernt vom hinteren Umlenkbereich auf der anderen Seite des Backraums und insbesondere im Backmassenauftragsbereich, im Schließbereich, im Öffenbereich oder im Backproduktentnahmebereich in den Backraum mündet bzw. aus dem Backraum abzweigt.

Gegebenenfalls ist vorgesehen, dass ein Abzuggebläse zur Absaugung des Brennraumgases durch den Abzug vorgesehen ist.

Gegebenenfalls ist vorgesehen, dass zwei oder mehr Konvektionsgebläse vorgesehen sind, die getrennt voneinander an unterschiedlichen Stellen in den Backraum münden und die insbesondere im Bereich des hinteren Umlenkbereiches oder durch die hintere Stirnwand des Backraums in den Backraum münden.

Gegebenenfalls ist vorgesehen, dass eine Luftaufbereitungsanordnung vorgesehen ist, die eine Luftvorwärmung, eine Luftfilterung, eine Luftbefeuchtung und/oder eine Luftentfeuchtung umfasst.

Gegebenenfalls ist vorgesehen, dass eine Regelungsanordnung zur Regelung der Temperatur der zugeführten Luft, zur Regelung der Temperatur der abgeführten Brennraumgase, zur Regelung der Backraumfeuchtigkeit und/oder zur Regelung der Backraumtemperatur vorgesehen ist.

Gegebenenfalls ist vorgesehen, dass eine Regelungsanordnung oder eine Steuerungsanordnung zur Regelung oder Steuerung des Volumenstroms des oder der Konvektionsgebläse(s) vorgesehen ist.

Gegebenenfalls ist vorgesehen, dass der Endlosförderer entlang einer oberen Transportfläche und entlang einer vertikal von der oberen Transportfläche beabstandet angeordnete unteren Transportfläche verläuft.

In weiterer Folge wird die Erfindung anhand der Figuren weiter beschrieben, wobei diese Figuren beispielhafte Ausführungsformen in stark vereinfachten Darstellungen sind.
Fig. 1 zeigt eine Seitenansicht einer Ausführungsform eines Backofens.
Fig. 2 zeigt einen Horizontalschnitt des Backofens aus Fig. 1 in einer stark vereinfachten Darstellung.
Fig. 3 zeigt einen Längsschnitt eines erfindungsgemäßen Backofens in einer stark vereinfachten Darstellung.
Fig. 4 zeigt einen Querschnitt des Backofens im Backmassenauftragsbereichs.
Fig. 5 zeigt einen Querschnitt des Backofens im Bereich eines Sichtfensters bzw. im Bereich einer Bildaufnahmeeinrichtung.
Fig. 6 zeigt ein mögliches aufgenommenes Bild von einer oder mehreren Bildaufnahmeeinrichtungen.
Fig. 7 zeigt ein Detail einer Bildaufnahmeeinrichtung.
Fig. 8 zeigt ein Detail eines Schnitts mit einem Sichtfenster.
Fig. 9 zeigt ein Detail der Räumanordnung.

Wenn nicht anders angegeben, so entsprechen die in den Figuren eingezeichneten Bezugszeichen folgenden Komponenten:
Endlosförderer 1, Backzange 2, Backmassenauftragsbereich 3, Schließbereich 4, Backraum 5, Öffenbereich 6, Backproduktentnahmebereich 7, obere Transportebene 8, hinterer Umlenkbereich 9, vorderer Umlenkbereich 10, untere Transportebene 11, Backraumwand 12, Abzug 13, Heizanordnung 14, Backmassenauftragsvorrichtung 15, Backmassenzuführungsleitung 16, Aufgießer 17, Sichtfenster 18, Lichtquelle 19, Bildaufnahmeeinrichtung 20, Gebläse 21, Räumanordnung 22, Räumförderfläche 23, Räumelement 24, Räumförderer 25, oberer Abschnitt (der Räumanordnung) 26, unterer Abschnitt (der Räumanordnung) 27, Bewegungsrichtung (der Räumelemente) 28, Bewegungsrichtung (der Backplatten) 29, Öffnung 30, Andocköffnung 31.

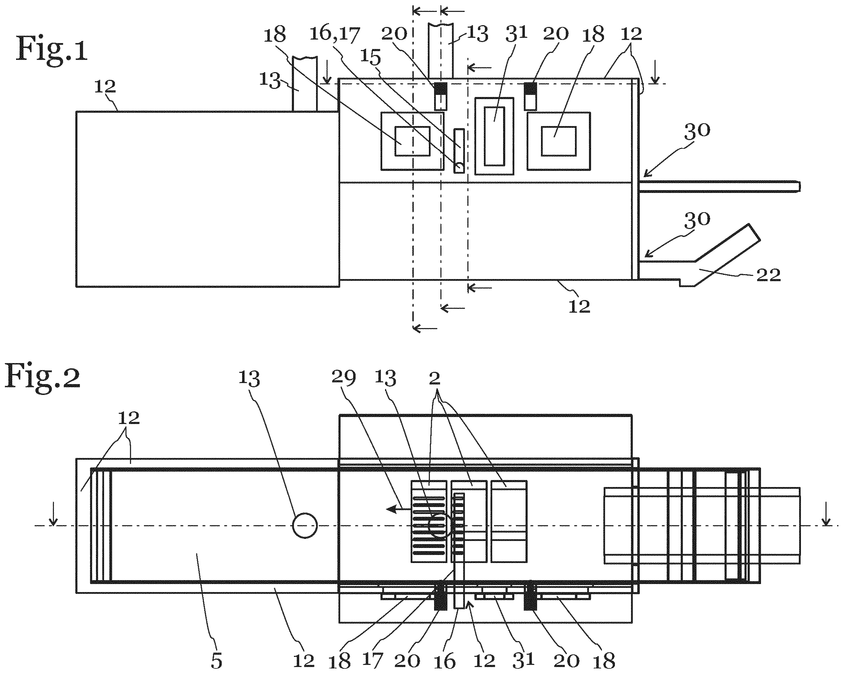

Fig. 1 zeigt eine Seitenansicht einer möglichen Ausführungsform eines erfindungsgemäßen Backofens in einer stark vereinfachten Darstellung. Der Ofen ist langgestreckt ausgebildet und mit einem im Wesentlichen geschlossenen Gehäuse versehen. Dieses Gehäuse ist in der vorliegenden Ausführungsform durch die Backraumwände 12 gebildet. Bevorzugt ist ein nicht dargestelltes Maschinengestell vorhanden, an dem die Backraumwände 12 bzw. das Gehäuse angebracht sind. Gemäß der vorliegenden Ausführungsform sind die Backraumwände 12 mit einer Wärmeisolierung versehen. Ferner umfasst der Backofen mindestens zwei Abzüge 13, die die Backraumwände 12 bzw. zumindest eine Backraumwand 12 durchsetzen, um einen Abzug des Backraumgases zu ermöglichen. Die Backraumwände 12 sind zumindest teilweise durch ein hitzebeständiges, festes Material gebildet. Ein Beispiel für dieses Material sind Edelstahlplatten bzw. Edelstahlbleche, die zumindest einseitig mit einer Wärmeisolierung versehen sein können. Bevorzugt sind zwei parallel zueinander verlaufende Metallbleche, wie insbesondere Edelstahlbleche, vorgesehen, zwischen denen eine Wärmeisolierung vorgesehen ist.

Um dennoch ins Innere des Backofens blicken zu können, weist der Backofen in der vorliegenden Ausführungsform zwei Sichtfenster 18 auf. Zusätzlich oder alternativ können, wie in der vorliegenden Ausführungsform, eine oder mehrere Bildaufnahmeeinrichtungen 20 vorgesehen sein, die ins Innere des Backofens weisen, um durch Übertragung der Aufnahme eine Augenscheinnahme des Innenraums, insbesondere des Backraums 5, des Backofens vornehmen zu können.

Ferner ist eine Backmassenauftragsvorrichtung 15 vorgesehen, die eine Backmassenzuführungsleitung 16 und einen Aufgießer 17 umfasst. Durch die Backmassenzuführungsleitung 16 kann eine Backmasse ins Innere des Backofens gefördert werden. Durch den Aufgießer 17 kann diese Backmasse aufgegossen werden, um ein gebackenes Produkt zu bilden. Die Vorrichtung umfasst ferner eine Räumanordnung 22. Diese Räumanordnung 22 ist dazu eingerichtet, innerhalb des Backofens anfallenden Backabfall aus dem Backofen auszutragen. Hierzu ragt ein Förderer durch eine Öffnung 30. Eine weitere Öffnung 30 ist in der vorliegenden Ausführungsform oberhalb der Räumanordnung 22 angeordnet. Diese Öffnung 30 ist dazu eingerichtet, die gebildeten Backprodukte aus dem Backofen befördern zu können. Hierzu ist beispielsweise ein Förderband oder ein weiterer Abschnitt der Räumanordnung 22 vorgesehen.

Die Öffnungen 30 sind so klein wie möglich gehalten und insbesondere spaltförmig oder schlitzförmig ausgebildet, um ein Entweichen der heißen Backraumgase bestmöglich zu vermeiden.

Ferner umfasst die Ausführungsform eine Andocköffnung 31, die, wie dargestellt, durch eine Klappe verschlossen sein kann. Über diese Andocköffnung 31 kann beispielsweise eine Reinigungsvorrichtung, wie beispielsweise eine Laserreinigungsvorrichtung, an dem Backofen angedockt werden. Bevorzugt ist die Andocköffnung 31 derart ausgebildet, dass sie durch das Andocken der Reinigungsvorrichtung oder eines anderen Geräts verschlossen wird.

Fig. 2 zeigt einen horizontalen Längsschnitt des in Fig. 1 dargestellten Backofens. Der Backraum 5 ist von Backraumwänden 12 umgeben. Die Backraumwände 12 sind mit einer Wärmeisolierung versehen, sodass der Wärmestrom, der vom Backraum 5 nach außen strömt, verringert wird. In der Fig. 2 sind drei Backzangen 2 dargestellt. Diese werden in der vorliegenden Ausführungsform entlang der Bewegungsrichtung 29 durch den Backraum 5 befördert. In dem Bereich, in dem die Backplatten 2 eingezeichnet sind, sind diese geöffnet. In dieser offenen Stellung kann über die Backmassenauftragsvorrichtung 15, insbesondere über die Backmassenzuführungsleitung 16, und den Aufgießer 17 die Backmasse auf zumindest eine Fläche der Backzangen 2 aufgetragen werden. In herkömmlicher Weise kann die Backmasse streifenförmig auf die Backzange 2 aufgetragen werden. Die Backmassenauftragsvorrichtung 15, insbesondere die Backmassenzuführungsleitung 16 und der Aufgießer 17, ragen in den Backraum 5 des Backofens. Da sich mit Backmasse gefüllte Komponenten der Backmassenauftragsvorrichtung 15 innerhalb des heißen Backraums 5 befinden, ist es vorteilhaft, diese mit einer Wärmeisolierung zu versehen oder aktiv zu kühlen. Eine Kühlung kann in allen Ausführungsformen beispielsweise über eine doppelwandige Struktur erfolgen, die mit einem Kühlmedium durchströmt oder durchspült wird. Eine Wärmeisolierung bzw. eine Isolierung der Komponenten der Backmassenauftragsvorrichtung 15 kann beispielsweise durch ein herkömmliches Isoliermaterial, wie poröse Körper, Schaumkörper, oder ähnliche Materialien, erfolgen.

Wie auch in Fig. 1 dargestellt, umfasst der Backofen der Fig. 2 zwei Sichtfenster 18, einen Abzug 13, eine, insbesondere zwei, Bildaufnahmeeinrichtungen 20 und eine Andocköffnung 31, die auch hier verschließbar bzw. verschlossen ausgebildet ist. Die Bewegung, insbesondere der Antrieb, der Backzangen 2 kann über herkömmliche Mittel erfolgen.

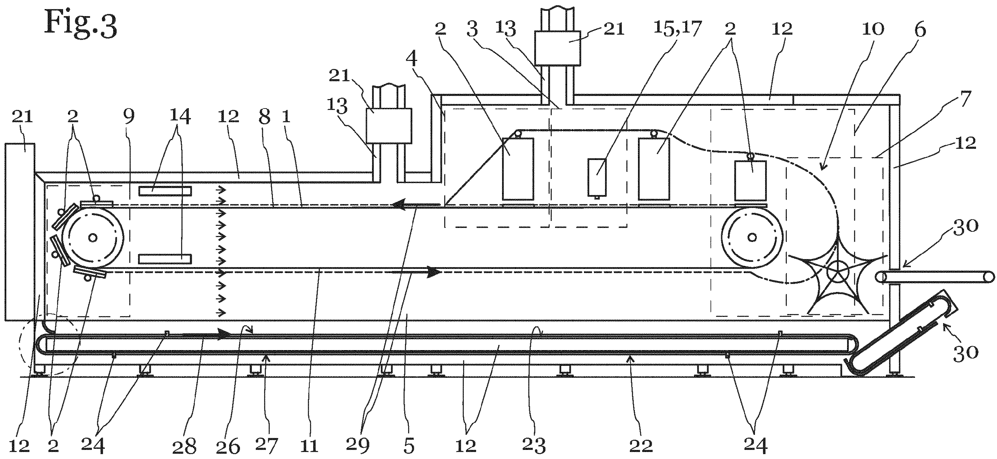

Fig. 3 zeigt einen Längsschnitt eines erfindungsgemäßen Backofens in einer schematischen Darstellung. Der Backofen umfasst einen Endlosförderer 1, entlang dessen Erstreckung mehrere Backzangen 2 angeordnet sind. Zur Vereinfachung der Darstellung sind nicht alle Backzangen 2, sondern nur einige Backzangen 2, dargestellt. In allen Ausführungsformen kann vorgesehen sein, dass die Backzangen 2 aneinandergereiht entlang des Endlosförderers 1 angeordnet sind.

Die Backzangen 2 werden entlang des Endlosförderers 1 durch den Backofen befördert. Hierbei durchlaufen sie nacheinander einen Backmassenauftragsbereich 3, einen Schließbereich 4, einen Öffenbereich 6 und einen Backproduktentnahmebereich 7. Gemäß der vorliegenden Erfindung sind diese Bereiche innerhalb des Backraums 5 angeordnet. Die Backzangen 2 werden entlang des Endlosförderers 1 entlang einer oberen Transportebene 8 zu einem hinteren Umlenkbereich 9 befördert, in diesem hinteren Umlenkbereich 9 zu einer unteren Transportebene 11 gefördert und entlang dieser unteren Transportebene 11 zu einem vorderen Umlenkbereich 10 befördert, wo die Backplatten 2 wiederum auf die obere Transportebene 8 befördert werden. Hierbei liegen auch der vordere Umlenkbereich 10 und der hintere Umlenkbereich 9 innerhalb des Backraums 5. Der Backraum 5 ist von Backraumwänden 12 umgeben. Dadurch ist der Backraum 5 im Wesentlichen geschlossen ausgebildet. Jedoch weisen die Backraumwände 12 notwendige Öffnungen auf. Eine notwendige Öffnung zur Ableitung der Backraumgase ist beispielsweise durch den oder die Abzüge 13 gebildet.

Weitere Öffnungen 30 sind beispielsweise im Backproduktentnahmebereich 7 oder im Bereich der Räumanordnung 22 vorgesehen.

In dem Backraum 5 ist eine Heizanordnung 14 zur Beheizung des Backraums 5 vorgesehen. Erfindungsgemäß umfasst die Heizanordnung 14 zwei Heizvorrichtungen, die als Strahlungsheizvorrichtungen ausgebildet sind.

In der vorliegenden Ausführungsform sind die als Strahlungsheizungsvorrichtungen ausgebildeten Heizvorrichtungen von oben auf die Backzangen 2 gerichtet. Insbesondere ist die Heizanordnung 14 bzw. deren Heizvorrichtungen im Bereich oder nahe des hinteren Umlenkbereichs 9 angeordnet. Insbesondere sind die Heizanordnungen 14 entfernt vom Backproduktentnahmebereich 7 und/oder entfernt vom Backmassenauftragsbereich 3 angeordnet.

Bei der vorliegenden Ausführungsform ist vorgesehen, dass ein Abzug 13 im Backmassenauftragsbereich 3 bzw. im Schließbereich 4 in den Backraum 5 mündet bzw. aus dem Backraum 5 abzweigt und dass ein weiterer Abzug 13 zwischen der Heizanordnung 14 und dem Schließbereich 4 in den Backraum 5 mündet bzw. aus dem Backraum 5 abzweigt.

Schematisch dargestellt ist auch die Backmassenauftragsvorrichtung 15, die im Backmassenauftragsbereich 3 angeordnet ist und einen Aufgießer 17 umfasst. Die Backmassenauftragsvorrichtung 15 ist dazu geeignet und/oder eingerichtet, die Backmasse auf die geöffneten Backzangen 2 aufzutragen.

Ferner umfasst der Backofen gemäß Fig. 3 schematisch dargestellte Gebläse 21. Diese können einerseits Konvektionsgebläse sein, um eine entlang der Bewegungsrichtung 29 der Backplatten 2 verlaufende Konvektionsströmung zu erzeugen. Diese Konvektionsströmung ist in der Zeichnung durch die parallel verlaufenden, kurzen Pfeile angedeutet. Darüber hinaus oder alternativ kann ein Gebläse 21 vorgesehen sein, das als Abzugsgebläse die heißen Backraumgase absaugen kann.

Unterhalb des Endlosförderers 1, insbesondere unterhalb der Backzangen 2, ist eine Räumanordnung 22 vorgesehen. Die Räumanordnung 22 umfasst eine Räumförderfläche 23. Backabfall, der beispielsweise von den Backzangen 2 abfällt, sammelt sich auf dieser Räumförderfläche 23. Ferner umfasst die Räumanordnung 22 mehrere Räumelemente 24. Diese Räumelemente 24 werden über einen Räumförderer 25 bewegt. Die Räumelemente 24 werden insbesondere derart bewegt, dass der im Backraum 5 anfallende Backabfall aus dem Backofen ausgetragen wird. In der vorliegenden Ausführungsform sind die Räumelemente 24 entlang der Räumförderfläche 23 geführt, um auf die Räumförderfläche 23 fallenden Backabfall abzutransportieren. Hierzu umfasst die Räumanordnung 22 einen als Endlosförderer ausgebildeten Räumförderer 25, der die Räumelemente 24 entlang der Räumförderfläche 23 bewegt. Die Räumförderfläche 23 ist in der vorliegenden Ausführungsform zwischen dem oberen Abschnitt 26 der Räumanordnung 22 und dem unteren Abschnitt 27 der Räumanordnung 22 angeordnet. Die Räumförderfläche 23 kann bevorzugt mit einer Wärmeisolierung versehen werden. Insbesondere ist in der vorliegenden Ausführungsform vorgesehen, dass die Räumförderfläche 23 ein Teil einer Backraumwand 12 ist oder insbesondere eine Backraumwand 12 bildet. Die Backzangen 2 können über herkömmliche Mittel, beispielsweise über eine Kulissensteuerung, geöffnet bzw. geschlossen werden. Das Schließen der Backzangen 2 erfolgt im Schließbereich 4. Das Öffnen der Backzangen 2 erfolgt im Öffenbereich 6. Das Öffnen kann insbesondere im vorderen Umlenkbereich 10 erfolgen. Gegebenenfalls kann der Öffenbereich 6 auch im Verlauf der oberen Transportebene 8 angeordnet sein. Die Abnahme der Backprodukte im Backproduktentnahmebereich 7 kann über herkömmliche Mittel, beispielsweise über ein Malteserrad oder ähnliche Einrichtungen, erfolgen.

Der Räumförderer 25 kann beispielsweise beidseitig der Räumförderfläche 23 verlaufende Ketten oder Gliederelemente umfassen, an denen in gewissen Abständen die Räumelemente 24 angeordnet sind. Die Räumelemente 24 können beispielsweise leisten- bzw. stegförmige Elemente sein, die auf der Räumförderfläche 23 durch die Bewegung des Räumförderers 25 entlangschaben. Bevorzugt sind alle Elemente der Räumanordnung 22 hitzebeständig ausgebildet. Die Räumförderfläche 23 kann beispielsweise eine Metallfläche, insbesondere eine durchgehende und/oder glatte Metallfläche, wie beispielsweise eine Edelstahlfläche, sein. Die Räumelemente 24 können beispielsweise Metallleisten sein. Der Räumförderer 25 kann beispielsweise durch eine oder mehrere Metallketten oder Metallbänder gebildet sein oder derartige Elemente umfassen. In der vorliegenden Ausführungsform verläuft die Bewegungsrichtung 28 der Räumelemente 24 entlang der Räumförderfläche 23 vom hinteren Umlenkbereich 9 Richtung vorderem Umlenkbereich 10.

Die Bewegungsrichtung 29 der Backzangen 2 an der unteren Transportebene 11 verläuft in der vorliegenden Ausführungsform in dieselbe Richtung.

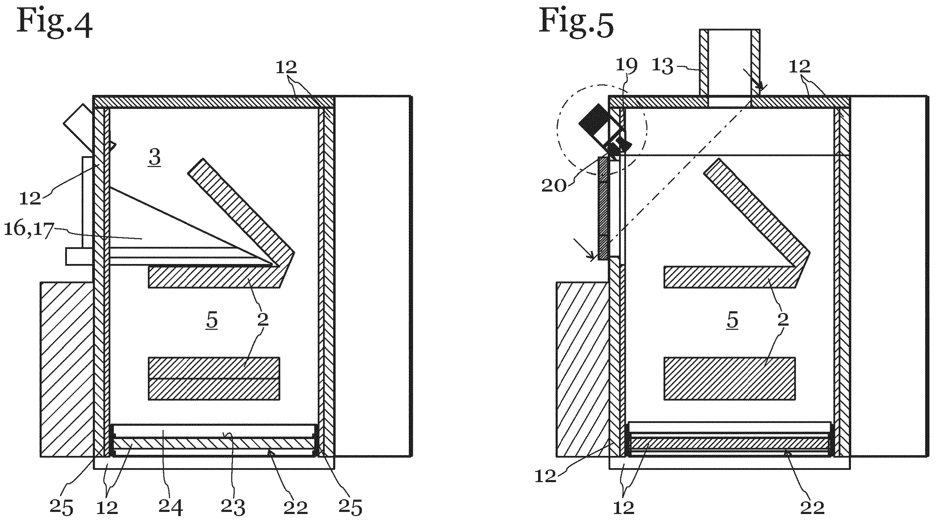

Fig. 4 zeigt eine schematische Schnittdarstellung, die beispielsweise jener Schnittlinie der Fig. 1 entspricht, die im Bereich der Backmassenauftragsvorrichtung 15, insbesondere im Backmassenauftragsbereich 3, verläuft. Der Backofen umfasst mehrere Backzangen 2, die entlang eines nicht dargestellten Endlosförderers 1 durch den Backraum 5 bewegt werden. Der Backraum 5 ist durch Backraumwände 12 begrenzt bzw. von Backraumwänden 12 umgeben. Im Backmassenauftragsbereich 3, in dem die vorliegende Schnittdarstellung verläuft, ist die Backmassenauftragsvorrichtung 15 vorgesehen. Diese umfasst einen Aufgießer 17 und eine Backmassenzuführungsleitung 16. In der vorliegenden Ausführungsform ist die Backmassenauftragsvorrichtung 15 lediglich schematisch dargestellt. Zur thermischen Entkopplung bzw. zur Kühlung der in dem Aufgießer 17 oder in der Backmassenzuführungsleitung 16 geförderten Backmasse ist die Backmassenauftragsvorrichtung 15 mit einer Wärmeisolierung und/oder mit einer Kühlung versehen. Die Backmasse kommt, wie bei herkömmlichen Backöfen, aus einem Backmassenreservoir und wird über eine Pumpe in die Backmassenzuführungsleitung 16 befördert.

Die Vorrichtung umfasst eine Räumanordnung 22 mit einer Räumförderfläche 23 und entlang eines Räumförderers 25 bewegbar angeordnete Räumelemente 24. Unmittelbar unterhalb der Räumförderfläche 23 ist in der vorliegenden Ausführungsform eine Wärmeisolierung vorgesehen.

Fig. 5 zeigt eine ähnliche Schnittdarstellung wie Fig. 4, wobei die Schnittlinie beispielsweise jener Schnittlinie aus Fig. 1 entspricht, die durch die Bildaufnahmeeinrichtung 20 verläuft. Der Backofen umfasst gemäß der vorliegenden Ausführungsform eine Bildaufnahmeeinrichtung 20. Überdies umfasst der Backofen eine Lichtquelle 19. Im oberen Bereich des dargestellten Abschnitts ist der Abzug 13 angeordnet.

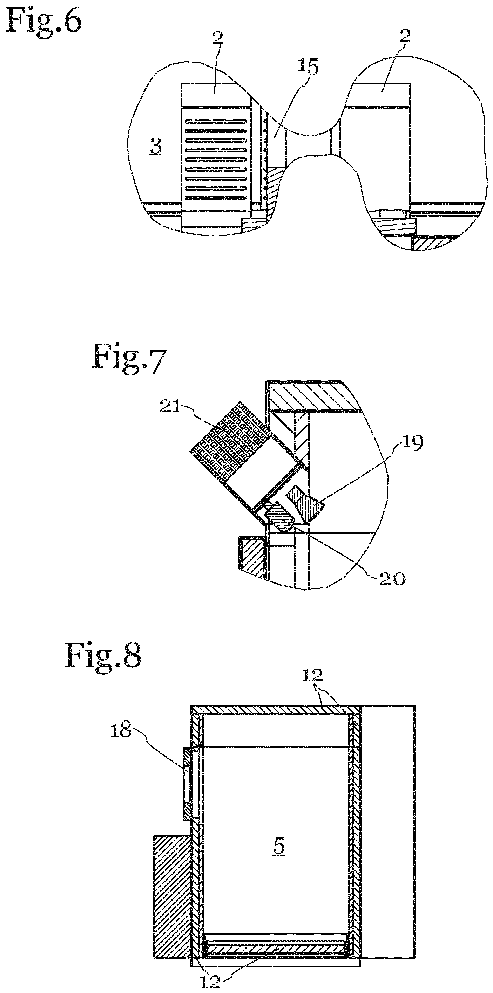

Fig. 6 zeigt einen beispielhaften Ausschnitt eines Bildes, wie es durch die Bildaufnahmeeinrichtungen 20 der Konstruktionen der Figuren 1, 2 und 5 erzeugt wird. Die Bildaufnahmeeinrichtungen 20 ermöglichen die Kontrolle bzw. die Beobachtung des Backmassenauftragsbereichs 3, der geöffneten Backzangen 2 und zumindest Teilen der Backmassenauftragsvorrichtung 15. Durch diese Bildaufnahmeeinrichtungen 20 kann eine Beobachtung dieser Bereiche im heißen Backraum 5 erfolgen, ohne den Backraum 5 öffnen zu müssen.

Fig. 7 zeigt eine vergrößerte Darstellung der Bildaufnahmeeinrichtung 20 und der Lichtquelle 19 aus Fig. 5. Beide Elemente ragen in den Backraum 5 oder sind in den Backraum 5 gerichtet, um die gewünschten Bilder aufnehmen bzw. übertragen zu können und um eine ausreichende Ausleuchtung für die Bildaufnahme zu gewährleisten. Zur thermischen Entkopplung oder Kühlung ist in der vorliegenden Ausführungsform ein Gebläse 21 vorgesehen, das beispielsweise auf einen mit der Bildaufnahmeeinrichtung 20 und/oder der Lichtquelle 19 verbundenen Kühlkörper gerichtet ist, um einen Wärmeabtransport zu bewirken. Dadurch können die Lichtquelle 19 und die Bildaufnahmeeinrichtung 20 gekühlt werden. Gegebenenfalls kann auch vorgesehen sein, dass die Bildaufnahmeeinrichtung 20 und/oder die Lichtquelle 19 hinter einer Glasscheibe angeordnet ist, sodass der Backraum 5 von der Bildaufnahmeeinrichtung 20 und/oder der Lichtquelle 19 durch diese Glasscheibe abgetrennt ist. Auch dadurch kann beispielsweise eine thermische Entkopplung gegenüber dem Backraum 5 erfolgen.

Fig. 8 zeigt eine Schnittdarstellung, die beispielsweise jener Schnittlinie aus Fig. 1 entspricht, die durch das Sichtfenster 18 verläuft. Das Sichtfenster 18 ist derart ausgestaltet, dass eine Augenscheinnahme des Inneren des Backofens, insbesondere des Backraums 5, erfolgen kann. Bevorzugt ist das Sichtfenster 18 als Isolierscheibenanordnung ausgebildet, bei der zwei parallel verlaufende Scheiben vorgesehen sind. Die innere der beiden Scheiben, also jene Scheibe, die näher am Backraum 5 angeordnet ist, ist insbesondere ausreichend temperaturbeständig ausgebildet. Zwischen den beiden Scheiben kann ein Hohlraum gebildet sein, um eine bessere thermische Entkopplung zu bewirken. Durch diese Isolierscheibenanordnung wird einerseits die Temperatur des Sichtfensters 18 an seiner Außenseite verringert, sodass die Gefahr verringert wird, dass sich eine Bedienperson verletzt. Darüber hinaus wird durch die Isolierscheibenanordnung auch die Effizienz des Backofens verbessert, da weniger Wärme durch das Sichtfenster 18 entweichen kann.

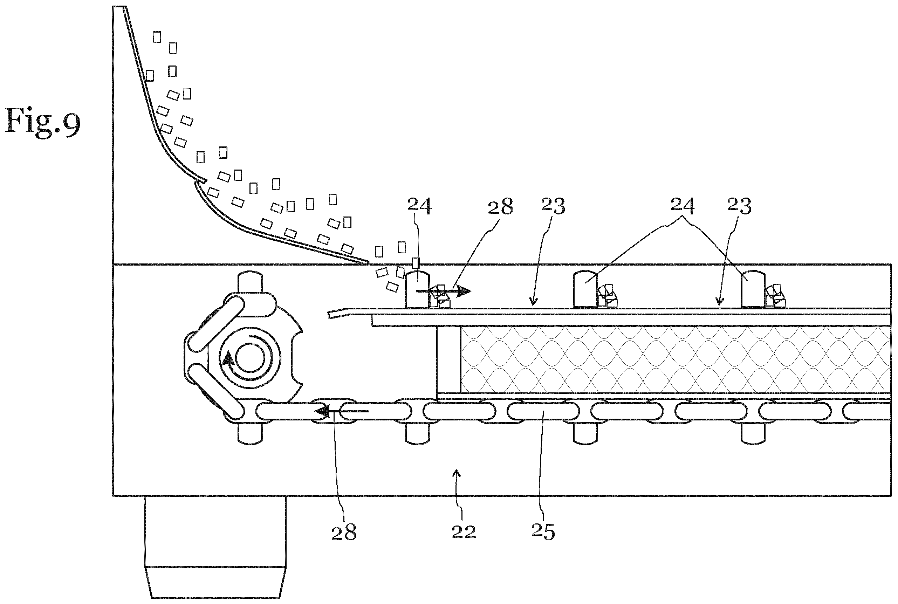

Fig. 9 zeigt einen Detailausschnitt eines Details der Räumanordnung 22, wie es beispielsweise in Fig. 3 eingezeichnet ist. Die Räumanordnung 22 umfasst eine Räumförderfläche 23, entlang derer der Backraumabfall abtransportiert werden kann. Die Räumanordnung 22 umfasst ferner mehrere Räumelemente 24. Diese Räumelemente 24 sind entlang eines als Endlosförderer ausgebildeten Räumförderers 25 angeordnet. Der Räumförderer 25 ist in der vorliegenden Darstellung teilweise ausgeblendet, um die Funktionsweise der Räumanordnung 22 besser beschreiben zu können. Die Räumelemente 24 werden entlang der Bewegungsrichtung 28 und entlang der Räumförderfläche 23 bewegt. Diese Bewegung geschieht über den Räumförderer 25, der, wie in der vorliegenden Ausführungsform, beispielsweise eine Kette umfasst, an der in gewissen Abständen die Räumelemente 24 angebracht sind. Die Räumförderfläche 23 ist bevorzugt mit einer Wärmeisolierung versehen, die in der vorliegenden Darstellung schraffiert dargestellt ist. Gegebenenfalls ist ein kastenförmiger Aufbau vorgesehen, der von oben von der Räumförderfläche 23 bzw. eines dieser die Räumförderfläche 23 bildenden Elemente abgedeckt ist. Innerhalb des Kastens kann eine Wärmeisolierung vorgesehen sein.

Durch die durchgehende, insbesondere unterbrechungsfreie, Ausgestaltung der Räumförderfläche 23, kann diese Räumförderfläche 23 als Backraumwand 12 dienen.

Durch die Wärmeisolierung kann die Räumförderfläche 23 insbesondere auch als wärmeisolierte Backraumwand 12 wirken.

Ferner kann die Räumanordnung 22, wie in der vorliegenden Ausführungsform, Leitbleche umfassen, durch die insbesondere in den Umlenkbereichen abfallender Backabfall auf die Räumförderfläche 23 transportiert wird. Hierdurch wird verhindert, dass Backraumabfall beispielsweise in Umlenkräder oder in einen Bereich gelangt, wo eine Entfernung durch die Räumanordnung 22 nicht möglich ist.

Bevorzugt erstreckt sich die Räumförderfläche 23 entlang der gesamten Längserstreckungsrichtung des Endlosförderers 1 der Backzangen 2. Insbesondere überragt die Räumförderfläche 23 bzw. die Räumanordnung 22 den Endlosförderer 1 der Backzangen 2, sodass sichergestellt wird, dass von den Backzangen 2 abfallender Backabfall zuverlässig aus dem Backofen ausgetragen werden kann. Dies ist insbesondere auch der Fig. 3 zu entnehmen.

## Patentansprüche

1. Backofen zum Herstellen gebackener, bevorzugt essbarer, Produkte, nämlich zur Herstellung von Flachwaffeln oder Hohlwaffeln, umfassend mehrere entlang einem Endlosförderer (1) vorgesehene öffenbare und schließbare Backzangen (2), die aneinandergereiht jeweils nacheinander:
- einen Backmassenauftragsbereich (3) zum Auftrag einer Backmasse auf eine geöffnete Backzange (2), wobei die Backmasse eine flüssige oder eine flüssig-pastöse Konsistenz aufweist,
- einen Schließbereich (4) zum Schließen der Backzangen (2),
- einen Öffenbereich (6) zum Öffnen der Backzangen (2),
- und einen Backproduktentnahmebereich (7) zur Entnahme der gebackenen Produkte aus den geöffneten Backzangen (2) durchlaufen,
- wobei sich der Endlosförderer zum Backen der Backprodukte in den geschlossenen Backzangen (2), durch einen Backraum (5) erstreckt,
- wobei der Endlosförderer (1) oder zumindest die Backzangen (2) entlang einer oberen Transportebene (8) verlaufen, dann in einem hinteren Umlenkbereich (9) auf eine, unterhalb der oberen Transportebene (8) verlaufende, untere Transportebene (11) umgelenkt werden, dann weiter entlang der unteren Transportebene (11) verlaufen und in einem vorderen Umlenkbereich (10) wieder auf die obere Transportebene (8) umgelenkt werden,
- wobei in dem Backraum (5) mindestens eine Heizanordnung (14) zur Beheizung der im Backraum (5) befindlichen Backzangen (2) vorgesehen ist,
- wobei die Heizanordnung (14) zwei Heizvorrichtungen umfasst, die als Strahlungsheizvorrichtungen ausgebildet sind,
- wobei der Backmassenauftragsbereich (3), der Schließbereich (4), der Öffenbereich (6) und der Backproduktentnahmebereich (7) innerhalb des Backraums (5) angeordnet sind, sodass sich der Backraum (5) im Wesentlichen über den gesamten Backofen erstreckt,
- wobei die obere Transportebene (8), der hintere Umlenkbereich (9), die untere Transportebene (11) und der vordere Umlenkbereich (10) innerhalb des Backraums (5) angeordnet sind,
- wobei der Backraum (5) als im Wesentlichen geschlossener Backraum (5) ausgebildet ist, der an allen Seiten von wärmeisolierten Backraumwänden (12) umgeben ist,
- **und** wobei der Backraum (5) im Backbetrieb durch die Heizanordnung (14) im Backmassenauftragsbereich (3), im Schließbereich (4), im Öffenbereich (6), im Backproduktentnahmebereich (7) und im vorderen Umlenkbereich (10) auf über 100°C, bevorzugt auf über 150°C oder besonders bevorzugt auf über oder etwa 175°C aufgeheizt ist,
**dadurch gekennzeichnet,**
- **dass** die Backraumwände (12) im Backmassenauftragsbereich (3), im Schließbereich (4), im Öffenbereich (6), im Backproduktentnahmebereich (7) und im vorderen Umlenkbereich (10) mit einer Wärmeisolierung versehen sind,
- **dass** die Heizvorrichtungen jeweils einen porösen Körper an ihrer Unterseite aufweisen, in dem und/oder an dessen Oberfläche ein Brenngemisch verbrannt wird und bevorzugt im Wesentlichen flammenfrei verbrannt wird, und dass der poröse Körper beispielsweise ein Metallgewebe, ein Drahtgewebe oder ein Metallgeflecht ist oder enthält, und
- **dass** im Backmassenauftragsbereich (3) eine Backmassenauftragsvorrichtung (15) in den Backraum (5) ragt,
- wobei die Backmassenauftragsvorrichtung (15) eine Backmassenzuführungsleitung (16) und einen Aufgießer (17) zur Förderung und zum Auftrag der Backmasse umfasst,
- und **dass** der in den Backraum (5) ragende Abschnitt der Backmassenauftragsvorrichtung (15) zur thermischen Isolierung oder Entkopplung der zuzuführenden Backmasse vom heißen Backraum (5), mit einer Wärmeisolierung und/oder mit einer Kühlung versehen ist.

2. Backofen nach Anspruch 1, **dadurch gekennzeichnet, dass** der gesamte Endlosförderer (1) oder zumindest alle an dem Endlosförderer (1) angeordneten Backzangen (2), insbesondere während des Backbetriebs, innerhalb des Backraums (5) angeordnet sind.

3. Backofen nach einem der Ansprüche 1 bis 2, **dadurch gekennzeichnet, dass** in zumindest einer der Backraumwände (12), insbesondere in einer seitlichen Backraumwand (12), mindestens ein Sichtfenster (18) zur Ermöglichung der Augenscheinnahme des Backmassenauftragsbereichs (3), des Schließbereichs (4), des Öffenbereichs (6) und/oder des Backproduktentnahmebereichs (7) von außen vorgesehen ist,
und insbesondere dass das Sichtfenster (18) als Isolierfensteranordnung ausgebildet ist, die zwei voneinander parallel beabstandete Scheiben mit einem dazwischenliegenden Isolierraum umfasst und bei der zumindest die innere Scheibe temperaturbeständig, insbesondere temperaturbeständig bis etwa 250°C oder mehr, ausgebildet ist,
und gegebenenfalls dass das Sichtfenster (18) oder zumindest eine der Scheiben der Isolierfensteranordnung lasersicher ausgebildet ist/sind, und insbesondere einen Filter für Laserstrahlung eines Reinigungslasers umfasst.

4. Backofen nach einem der Ansprüche 1 bis 3, **dadurch gekennzeichnet,**
- **dass** mindestens ein Abzug (13) zur Abführung der durch die Heizanordnung (14) erzeugten Backraumgase aus dem Backraum (5) vorgesehen ist,
- **dass** der Abzug (13) im Backmassenauftragsbereich (3), im Schließbereich (4), im Öffenbereich (6), im Backproduktentnahmebereich (7) oder im vorderen Umlenkbereich (10) in den Backraum (5) mündet bzw. aus dem Backraum (5) abzweigt,
und/oder dass der oder ein weiterer Abzug (13) zwischen der Heizanordnung (14) und dem Schließbereich (4) in den Backraum (5) mündet bzw. aus dem Backraum (5) abzweigt,
wobei gegebenenfalls ein regelbares Abzuggebläse (21) zur Absaugung des Brennraumgases durch den Abzug (13) vorgesehen ist.

5. Backofen nach einem der Ansprüche 1 bis 4, **dadurch gekennzeichnet,**
- **dass** eine Lichtquelle (19) zur Beleuchtung des Backmassenauftragsbereichs (3), des Schließbereichs (4), des Öffenbereichs (6) und/oder des Backproduktentnahmebereichs (7) vorgesehen ist.

6. Backofen nach einem der Ansprüche 1 bis 5, **dadurch gekennzeichnet,**
- **dass** mindestens eine Bildaufnahmeeinrichtung (20), wie insbesondere eine Videokamera, vorgesehen ist, die auf den Backmassenauftragsbereich (3), auf den Schließbereich (4), auf den Öffenbereich (6) und/oder auf den Backproduktentnahmebereich (7) gerichtet ist
und insbesondere dass die Bildaufnahmeeinrichtung (20) und/oder die Lichtquelle (19) zur Isolierung oder zur thermischen Entkopplung gegenüber dem heißen Backraum (5) mit einer Wärmeisolierung und/oder mit einer Kühlung versehen ist.

7. Backofen nach einem der Ansprüche 1 bis 6,
- wobei eine Räumanordnung (22) zum automatischen oder automatisierten Austrag von im Backraum (5) anfallendem Backabfall vorgesehen ist,
- wobei die Räumanordnung (22) eine Räumförderfläche (23) umfasst, die unterhalb des Endlosförderers (1) entlang der Längserstreckung des Endlosförderers (1) verläuft,
- wobei die Räumanordnung (22) entlang eines endlosen Räumförderers (25) angeordnete Räumelemente (24) aufweist, die zur Beförderung des Backabfalls von dem Räumförderer (25) entlang der Räumförderfläche (23) bewegt werden oder sind,
- und wobei der als Endlosförderer ausgebildete Räumförderer (25) oder zumindest die an dem Räumförderer (25) angebrachten Räumelemente (24) zusammen einen oberen Abschnitt (26) und einen unterhalb des oberen Abschnitts (26) angeordneten unteren Abschnitt (27) definieren,
**dadurch gekennzeichnet, dass** die Räumförderfläche (23) zwischen dem oberen Abschnitt (26) und dem unteren Abschnitt (27) angeordnet ist.

8. Backofen nach Anspruch 7, **dadurch gekennzeichnet, dass** die Räumförderfläche (23) unmittelbar unterhalb des oberen Abschnitts (26) angeordnet ist, und dass der Austrag des Backabfalls entlang der Räumförderfläche (23) durch Bewegung der Räumelemente (24) des oberen Abschnitts (26) erfolgt.

9. Backofen nach Anspruch 7 oder 8, **dadurch gekennzeichnet,**
- **dass** die Bewegungsrichtung (28) der Räumelemente (24) des oberen Abschnitts (26) vom hinteren Umlenkbereich (9) des Endlosförderers (1) der Backzangen (2) Richtung vorderem Umlenkbereich (10) des Endlosförderers (1) der Backzangen (2) verläuft,
- und/oder dass die Bewegungsrichtung (28) der Räumelemente (24) des oberen Abschnitts (26) der Bewegungsrichtung (29) der Backplatten (2) entlang der unteren Transportebene (11) folgt.

10. Backofen nach einem der Ansprüche 7 bis 9, **dadurch gekennzeichnet, dass** zwischen dem oberen Abschnitt (26) und dem unteren Abschnitt (27) der Räumanordnung (22) eine Wärmeisolierung vorgesehen ist,
und dass die Wärmeisolierung insbesondere unterhalb der Räumförderfläche (23) oder unmittelbar unterhalb der Räumförderfläche (23) angeordnet ist.

11. Backofen nach einem der Ansprüche 7 bis 10, **dadurch gekennzeichnet, dass** die Räumanordnung (22), insbesondere die Räumförderfläche (23), den Backraum (5) begrenzt oder zumindest eine der Backraumwände (12) bildet.

12. Backofen nach einem der Ansprüche 1 bis 11, **dadurch gekennzeichnet, dass** der Backraum (5) oder dessen Backraumwände (12), insbesondere im vorderen Umlenkbereich (10), mindestens eine Öffnung (30) zur Ausgabe der gebackenen Produkte und/oder zum Austrag des Backabfalls aufweist.

## Claims

1. Baking oven for producing baked, preferably edible, products, namely for producing flat wafers or hollow wafers, comprising multiple openable and closable baking tongs (2) which are provided along an endless conveyor (1) and which, lined up one after the other, pass through:
- a baking mass application area (3) for applying a baking mass to opened baking tongs (2), wherein the baking mass has a liquid or liquid-pasty consistency,
- a closing area (4) for closing the baking tongs (2),
- an opening area (6) for opening the baking tongs (2)
- and a baking product removal area (7) for removing the baked products from the opened baking tongs (2),
- wherein the endless conveyor for baking the baking products in the closed baking tongs (2) extends through a baking chamber (5),
- wherein the endless conveyor (1) or at least the baking tongs (2) extend(s) along an upper transport plane (8), is/are deflected in a rear deflection area (9) to a lower transport plane (11) extending below the upper transport plane (8), continue(s) to extend along the lower transport plane (11) and is/are deflected back to the upper transport plane (8) in a front deflection area (10),
- wherein at least one heating arrangement (14) is provided in the baking chamber (5) for heating the baking tongs (2) located in the baking chamber (5),
- wherein the heating arrangement (14) comprises two heating devices which are designed as radiant heating devices
- wherein the baking mass application area (3), the closing area (4), the opening area (6) and the baking product removal area (7) are arranged inside the baking chamber (5), such that the baking chamber (5) extends substantially over the entire baking oven,
- wherein the upper transport plane (8), the rear deflection area (9), the lower transport plane (11) and the front deflection area (10) are arranged inside the baking chamber (5),
- wherein the baking chamber (5) is designed as a substantially closed baking chamber (5) which is surrounded on all sides by thermally insulated baking chamber walls (12),
- and wherein the baking chamber (5) is heated during baking operation by the heating arrangement (14) in the baking mass application area (3), in the closing area (4), in the opening area (6), in the baking product removal area (7) and in the front deflection area (10) to above 100 °C, preferably to above 150 °C or particularly preferred to above or approximately 175 °C,
**characterized**
- **in that** the baking chamber walls (12) in the baking mass application area (3), in the closing area (4), in the opening area (6), in the baking product removal area (7) and in the front deflection area (10) are provided with thermal insulation,
- **in that** the heating devices each have a porous body on their bottom in which and/or on the surface of which a combustion mixture is burnt and is preferably burnt in a substantially flame-free manner, and in that the porous body is or contains for example a metal mesh, a wire mesh or a metal braid, and
- **in that** a baking mass application device (15) projects into the baking chamber (5) in the baking mass application area (3),
- wherein the baking mass application device (15) comprises a baking mass supply line (16) and a pouring device (17) for delivering and applying the baking mass,
- and **in that** the section of the baking mass application device (15) projecting into the baking chamber (5) is provided with thermal insulation and/or cooling for thermal insulation or decoupling of the baking mass to be supplied from the hot baking chamber (5).

2. The baking oven according to claim 1, **characterized in that** the entire endless conveyor (1) or at least all the baking tongs (2) arranged on the endless conveyor (1) are arranged inside the baking chamber (5), in particular during baking operation.

3. The baking oven according to one of claims 1 to 2, **characterized in that** at least one inspection window (18) is provided in at least one of the baking chamber walls (12), in particular in a lateral baking chamber wall (12), to enable the baking mass application area (3), the closing area (4), the opening area (6) and/or the baking product removal area (7) to be inspected from the outside,
and in particular that the inspection window (18) is designed as an insulating window arrangement comprising two panes spaced parallel to one another with an insulating space between them and in which at least the inner pane is designed to be temperature-resistant, in particular temperature-resistant up to approximately 250 °C or more,
and optionally **in that** the inspection window (18) or at least one of the panes of the insulating window arrangement is/are designed to be laser-safe, and in particular comprises a filter for laser radiation from a cleaning laser.

4. The baking oven according to one of claims 1 to 3, **characterized**
- **in that** at least one extractor (13) is provided for discharging the baking chamber gases generated by the heating arrangement (14) from the baking chamber (5),
- **in that** the extractor (13) leads into the baking chamber (5) or branches off from the baking chamber (5) in the baking mass application area (3), in the closing area (4), in the opening area (6), in the baking product removal area (7) or in the front deflection area (10),
and/or in that the or a further extractor (13) leads into the baking chamber (5) or branches off from the baking chamber (5) between the heating arrangement (14) and the closing area (4),
wherein optionally a controllable extractor fan (21) is provided for extracting the combustion chamber gas through the extractor (13).

5. The baking oven according to one of claims 1 to 4, **characterized**
- **in that** a light source (19) is provided for illuminating the baking mass application area (3), the closing area (4), the opening area (6) and/or the baking product removal area (7).

6. The baking oven according to one of claims 1 to 5, **characterized**
- **in that** at least one image recording device (20), such as in particular a video camera, is provided, which is pointed at the baking mass application area (3), at the closing area (4), at the opening area (6) and/or at the baking product removal area (7),
and in particular that the image recording device (20) and/or the light source (19) is/are provided with thermal insulation and/or cooling for insulation or thermal decoupling from the hot baking chamber (5).

7. The baking oven according to one of claims 1 to 6,
- wherein a clearing arrangement (22) is provided for the automatic or automated discharge of baking waste accumulating in the baking chamber (5),
- wherein the clearing arrangement (22) comprises a clearing conveyance surface (23) which extends below the endless conveyor (1) along the longitudinal extent of the endless conveyor (1),
- wherein the clearing arrangement (22) has clearing elements (24) arranged along an endless clearing conveyor (25), which move or are moved along the clearing conveyance surface (23) by the clearing conveyor (25) for conveying the baking waste
- and wherein the clearing conveyor (25) designed as an endless conveyor or at least the clearing elements (24) attached to the clearing conveyor (25) together define an upper section (26) and a lower section (27) arranged below the upper section (26),
**characterized in that** the clearing conveyance surface (23) is arranged between the upper section (26) and the lower section (27).

8. The baking oven according to claim 7, **characterized in that** the clearing conveyance surface (23) is arranged directly below the upper section (26), and **in that** the baking waste is discharged along the clearing conveyance surface (23) by moving the clearing elements (24) of the upper section (26).

9. The baking oven according to claim 7 or 8, **characterized**
- **in that** the direction of movement (28) of the clearing elements (24) of the upper section (26) extends from the rear deflection area (9) of the endless conveyor (1) of the baking tongs (2) towards the front deflection area (10) of the endless conveyor (1) of the baking tongs (2),
- and/or in that the direction of movement (28) of the clearing elements (24) of the upper section (26) follows the direction of movement (29) of the baking plates (2) along the lower transport plane (11).

10. The baking oven according to one of claims 7 to 9, **characterized in that** thermal insulation is provided between the upper section (26) and the lower section (27) of the clearing arrangement (22), and **in that** the thermal insulation is arranged in particular below the clearing conveyance surface (23) or directly below the clearing conveyance surface (23).

11. The baking oven according to one of claims 7 to 10, **characterized in that** the clearing arrangement (22), in particular the clearing conveyance surface (23), delimits the baking chamber (5) or forms at least one of the baking chamber walls (12).

12. The baking oven according to one of claims 1 to 11, **characterized in that** the baking chamber (5) or its baking chamber walls (12), in particular in the front deflection area (10), has at least one opening (30) for dispensing the baked products and/or for discharging the baking waste.

## Revendications

1. Four pour la fabrication de produits cuits, de préférence comestibles, à savoir pour la fabrication de gaufrettes plates ou de gaufrettes creuses, comprenant plusieurs pinces de cuisson (2) pouvant être ouvertes et fermées, prévues le long d'un transporteur sans fin (1), qui passent de manière alignée les unes derrière les autres par :
- une zone d'application de masse à cuire (3) pour appliquer une masse à cuire sur une pince de cuisson (2) ouverte, la masse à cuire ayant une consistance liquide ou liquide-pâteuse,
- une zone de fermeture (4) pour fermer les pinces de cuisson (2),
- une zone d'ouverture (6) pour ouvrir les pinces de cuisson (2),
- et une zone de retrait des produits cuits (7) pour enlever les produits cuits des pinces de cuisson (2) ouvertes,
- dans lequel le transporteur sans fin s'étend à travers un espace de cuisson (5) pour cuire les produits à cuire dans les pinces de cuisson (2) fermées,
- dans lequel le transporteur sans fin (1) ou au moins les pinces de cuisson (2) s'étend/s'étendent le long d'un plan de transport supérieur (8), est/sont ensuite dévié/es dans une zone de déviation arrière (9) sur un plan de transport inférieur (11) s'étendant en dessous du plan de transport supérieur (8), continue/continuent ensuite à s'étendre le long du plan de transport inférieur (11) et est/sont à nouveau dévié/es dans une zone de déviation avant (10) sur le plan de transport supérieur (8),
- dans lequel au moins un agencement de chauffage (14) est prévu dans l'espace de cuisson (5) pour chauffer les pinces de cuisson (2) se trouvant dans l'espace de cuisson (5),
- dans lequel l'agencement de chauffage (14) comprend deux dispositifs de chauffage qui sont conçus comme des dispositifs de chauffage par rayonnement,
- dans lequel la zone d'application de masse à cuire (3), la zone de fermeture (4), la zone d'ouverture (6) et la zone de retrait des produits cuits (7) sont disposées à l'intérieur de l'espace de cuisson (5), de sorte que l'espace de cuisson (5) s'étend sensiblement sur tout le four,
- dans lequel le plan de transport supérieur (8), la zone de déviation arrière (9), le plan de transport inférieur (11) et la zone de déviation avant (10) sont disposés à l'intérieur de l'espace de cuisson (5),
- dans lequel l'espace de cuisson (5) est conçu comme un espace de cuisson (5) essentiellement fermé, qui est entouré de tous les côtés par des parois d'espace de cuisson (12) isolées thermiquement,
- dans lequel l'espace de cuisson (5) est chauffé en mode de cuisson par l'agencement de chauffage (14) dans la zone d'application de masse à cuire (3), dans la zone de fermeture (4), dans la zone d'ouverture (6), dans la zone de retrait des produits cuits (7) et dans la zone de déviation avant (10) à plus de 100 °C, de préférence à plus de 150 °C ou de manière particulièrement préférée à plus ou environ 175 °C,
**caractérisé**
- **en ce que** les parois d'espace de cuisson (12) sont pourvues d'une isolation thermique dans la zone d'application de masse à cuire (3), dans la zone de fermeture (4), dans la zone d'ouverture (6), dans la zone de retrait des produits cuits (7) et dans la zone de déviation avant (10),
- **en ce que** les dispositifs de chauffage présentent chacun un corps poreux sur leur face inférieure, dans lequel et/ou sur la surface duquel un mélange combustible est brûlé et, de préférence, brûlé essentiellement sans flamme, et en ce que le corps poreux est ou contient par exemple un tissu métallique, une toile métallique ou un treillis métallique, et
- **en ce que**, dans la zone d'application de masse à cuire (3), un dispositif d'application de masse à cuire (15) fait saillie dans l'espace de cuisson (5),
- dans lequel le dispositif d'application de masse à cuire (15) comprend une conduite d'alimentation en masse à cuire (16) et un dépositeur de pâte (17) pour le transport et l'application de la masse à cuire,
- et **en ce que** la section du dispositif d'application de masse à cuire (15) qui fait saillie dans l'espace de cuisson (5) est pourvue d'une isolation thermique et/ou d'un refroidissement pour isoler thermiquement ou découpler la masse à cuire à amener de l'espace de cuisson (5) chaud.

2. Four selon la revendication 1, **caractérisé en ce que** l'ensemble du transporteur sans fin (1) ou au moins toutes les pinces de cuisson (2) disposées sur le transporteur sans fin (1) sont disposées à l'intérieur de l'espace de cuisson (5), notamment en mode de cuisson.

3. Four selon l'une des revendications 1 à 2, **caractérisé en ce que** dans au moins l'une des parois d'espace de cuisson (12), en particulier dans une paroi latérale d'espace de cuisson (12), est prévue au moins une fenêtre d'observation (18) pour permettre l'observation visuelle de la zone d'application de masse à cuire (3), de la zone de fermeture (4), de la zone d'ouverture (6) et/ou de la zone de retrait des produits cuits (7) depuis l'extérieur,
et en particulier **en ce que** la fenêtre d'observation (18) est conçue comme un agencement de fenêtre d'isolation, qui comprend deux vitres espacées parallèlement l'une de l'autre avec un espace isolant entre elles et dans lequel au moins la vitre intérieure est résistante à la température, en particulier résistante à la température jusqu'à environ 250 °C ou plus, et le cas échéant **en ce que** la fenêtre d'observation (18) ou au moins l'une des vitres de l'agencement de fenêtre d'isolation est/sont conçue(s) pour être sûre(s) au laser, et comprend/comprennent en particulier un filtre pour le rayonnement laser d'un laser de nettoyage.

4. Four selon l'une des revendications 1 à 3, **caractérisé**
- **en ce qu'**au moins une hotte (13) est prévue pour évacuer de l'espace de cuisson (5) les gaz de l'espace de cuisson générés par l'agencement de chauffage (14),
- **en ce que** la hotte (13) débouche dans l'espace de cuisson (5) dans la zone d'application de masse à cuire (3), dans la zone de fermeture (4), dans la zone d'ouverture (6), dans la zone de retrait des produits cuits (7) ou dans la zone de déviation avant (10) ou bifurque hors de l'espace de cuisson (5),
et/ou en ce que le ou une autre hotte (13) débouche dans l'espace de cuisson (5) entre l'agencement de chauffage (14) et la zone de fermeture (4) ou bifurque hors de l'espace de cuisson (5),
dans lequel une soufflante d'extraction (21) réglable est éventuellement prévue pour l'aspiration des gaz de l'espace de cuisson par la hotte (13).

5. Four selon l'une des revendications 1 à 4, **caractérisé**
- **en ce qu'**une source de lumière (19) est prévue pour éclairer la zone d'application de masse à cuire (3), la zone de fermeture (4), la zone d'ouverture (6) et/ou la zone de retrait des produits cuits (7).

6. Four selon l'une des revendications 1 à 5, **caractérisé**
- **en ce qu'**il est prévu au moins un dispositif de prise de vue (20), comme en particulier une caméra vidéo, qui est orienté vers la zone d'application de masse à cuire (3), vers la zone de fermeture (4), vers la zone d'ouverture (6) et/ou vers la zone de retrait des produits cuits (7),
et en particulier en ce que le dispositif de prise de vue (20) et/ou la source de lumière (19) est pourvu d'une isolation thermique et/ou d'un refroidissement pour l'isolation ou le découplage thermique par rapport à l'espace de cuisson (5) chaud.

7. Four selon l'une des revendications 1 à 6,
- dans lequel un agencement de déblayage (22) est prévu pour l'évacuation automatique ou automatisée des déchets de cuisson produits dans l'espace de cuisson (5),
- dans lequel l'agencement de déblayage (22) comprend une surface de convoyage de déblayage (23) qui s'étend en dessous du transporteur sans fin (1) le long de l'extension longitudinale du transporteur sans fin (1),
- dans lequel l'agencement de déblayage (22) présente des éléments de déblayage (24) disposés le long d'un transporteur de déblayage (25) sans fin, qui sont déplacés le long de la surface de convoyage de déblayage (23) pour le transport des déchets de cuisson par le convoyeur de déblayage (25),
- et dans lequel le transporteur de déblayage (25) conçu comme un transporteur sans fin ou au moins les éléments de déblayage (24) montés sur le transporteur de déblayage (25) définissent ensemble une section supérieure (26) et une section inférieure (27) disposée en dessous de la section supérieure (26),
**caractérisé en ce que** la surface de convoyage de déblayage (23) est disposée entre la section supérieure (26) et la section inférieure (27).

8. Four selon la revendication 7, **caractérisé en ce que** la surface de convoyage de déblayage (23) est disposée directement en dessous de la section supérieure (26), et **en ce que** l'évacuation des déchets de cuisson le long de la surface de convoyage de déblayage (23) est réalisée par déplacement des éléments de déblayage (24) de la section supérieure (26).

9. Four selon la revendication 7 ou 8, **caractérisé**
- **en ce que** la direction de déplacement (28) des éléments de déblayage (24) de la section supérieure (26) s'étend depuis la zone de déviation arrière (9) du transporteur sans fin (1) des pinces de cuisson (2) en direction de la zone de déviation avant (10) du transporteur sans fin (1) des pinces de cuisson (2),
- et/ou en ce que la direction de déplacement (28) des éléments de déblayage (24) de la section supérieure (26) suit la direction de déplacement (29) des plaques de cuisson (2) le long du plan de transport inférieur (11).

10. Four selon l'une des revendications 7 à 9, **caractérisé en ce qu'**une isolation thermique est prévue entre la section supérieure (26) et la section inférieure (27) de l'agencement de déblayage (22), et **en ce que** l'isolation thermique est disposée en particulier en dessous de la surface de convoyage de déblayage (23) ou directement en dessous de la surface de convoyage de déblayage (23).

11. Four selon l'une des revendications 7 à 10, **caractérisé en ce que** l'agencement de déblayage (22), notamment la surface de convoyage de déblayage (23), délimite l'espace de cuisson (5) ou forme au moins l'une des parois d'espace de cuisson (12).

12. Four selon l'une des revendications 1 à 11, **caractérisé en ce que** l'espace de cuisson (5) ou ses parois d'espace de cuisson (12), notamment dans la zone de déviation avant (10), comporte au moins une ouverture (30) pour la distribution des produits cuits et/ou l'évacuation des déchets de cuisson.
